# FASCICULE DE BREVET EUROPEEN

(11) **EP 3 455 536 B1**
(45) Date de publication et mention de la délivrance du brevet: **14.02.2024**
(21) Numéro de dépôt: 17723062.0
(22) Date de dépôt: 09.05.2017
(51) Int. Cl.: F16L 53/00

(54) **DISPOSITIF CHAUFFANT POUR LE TRANSPORT D'UN MÉLANGE MULTIPHASIQUE D'HYDROCARBURES ET PROCÉDÉ ASSOCIÉ**
ERWÄRMUNGSVORRICHTUNG ZUM TRANSPORT EINER MEHRPHASIGEN MISCHUNG VON KOHLENWASSERSTOFFEN UND ZUGEHÖRIGES VERFAHREN
HEATING DEVICE FOR TRANSPORTING A MULTIPHASE MIXTURE OF HYDROCARBONS, AND ASSOCIATED METHOD

(30) Priorité: 10.05.2016 FR 1600755
(43) Date de publication de la demande: 20.03.2019
(73) Titulaire: TechnipFMC Subsea France, 92400 Courbevoie (FR)
(72) Inventeur: GOORIS, François, 92210 Saint Cloud (FR); ANSART, Bruno, 75003 Paris (FR); MARRET, Antoine, 75012 Paris (FR); THIRUNAVUKARASU, Satishkumar, 95340 Persan (FR)
(74) Mandataire: Lavoix
(86) Numéro de dépôt international: PCT/EP2017/061080
(87) Numéro de publication internationale: WO 2017/194550

(56) Documents cités:
- EP-A2- 2 520 839
- EP-A2- 2 520 839
- WO-A1-2009/063980
- WO-A1-2009/063980
- DE-A1-102014 005 093
- DE-A1-102014 005 093

## Description

### Domaine technique de l'invention

La présente invention concerne un ensemble comprenant un étendue d'eau et un dispositif chauffant pour le transport d'un mélange multiphasique d'hydrocarbures selon le préambule de la revendication 1.

Le domaine technique général de l'invention est celui de l'extraction et du transport d'un mélange multiphasique d'hydrocarbures dans le cadre de l'exploitation pétrolière et gazière sous-marine (dites « subsea » en langue anglaise).

### Etat de la technique

Les mélanges multiphasiques d'hydrocarbures issus des gisements de pétrole et de gaz sous-marins sont acheminés sur plusieurs kilomètres au travers des structures sous-marines pouvant être notamment des conduites flexibles ou rigides au sein d'étendues d'eaux de plus en plus profondes.

Les étendues d'eaux profondes (dites « Deep Water » en langue anglaise) voire très profondes (dites « Ultra Deep Water » en langue anglaise) se traduisent par une augmentation de la pression hydrostatique comprise entre 200 bar et 500 bar et une baisse de la température pouvant atteindre -5°C par exemple. Ainsi, lors du transport, des échanges thermiques avec le milieu environnant entraînent des chutes de température au sein des conduites et des dépôts solides peuvent obstruer de manière partielle ou totale les conduites.

En effet, les gisements pétroliers et gaziers comprennent un mélange multiphasique d'hydrocarbures comprenant notamment des hydrocarbures sous forme liquides et gazeux, de l'eau ainsi que des particules solides, notamment du sable. Le mélange multiphasique d'hydrocarbures peut également comprendre des gaz non hydrocarbures tels que l'azote ou le disulfure d'hydrogène. Dans les conditions de haute pression et basse température précitées, les molécules d'eau en présence de gaz contenus dans le mélange multiphasique d'hydrocarbures ont tendance à former des hydrates. Aussi, dans ces mêmes conditions, les huiles contenues dans le mélange multiphasique d'hydrocarbures ont tendance à former des cristaux de paraffines. La chute de température est également responsable de la formation de blocs de glace au sein des conduites entrainant un ralentissement du débit voir un arrêt total de la production. En plus, les dépôts solides tels que les hydrates, les paraffines et la glace peuvent créer des différentiels de pression le long des conduites et/ou bloquer des éléments mobiles dans les structures sous-marines, du type vanne, pompe ou autres, et peuvent ainsi entrainer des dommages irréversibles sur les infrastructures conduisant à des pertes économiques importantes. Aussi, des conséquences environnementales tragiques peuvent survenir et la sécurité des opérateurs peut être compromise.

Une des stratégies permettant de pallier ces inconvénients lors du transport du mélange multiphasique d'hydrocarbures consiste donc à maintenir au sein des conduites une température seuil supérieure à la température de solidification des paraffines, des hydrates et de la glace dans les conditions de haute pression.

Dans un premier temps, il a été proposé d'isoler thermiquement les conduites afin de minimiser les échanges thermiques entre la conduite et le milieu environnant et ainsi de palier une baisse de température à l'intérieur des conduites. Par exemple, il est bien connu de l'art antérieur l'usage des conduites à double enveloppe (dites « PiP » pour « pipe in pipe » en langue anglaise). Dans ce type de conduite, la double enveloppe est formée par deux tubes en acier coaxiaux. Plus particulièrement, ce type de conduite comprend un tube interne dans lequel le fluide est transporté et un tube externe. Entre le tube interne et le tube externe réside un espace périphérique totalement étanche comprenant de l'air, du gaz ou du vide qui permet d'assurer une isolation thermique passive du tube interne.

Cependant, le mélange multiphasique d'hydrocarbures est transporté sur plusieurs kilomètres. Ainsi, bien que les PiP soient une solution efficace en termes d'isolation thermique, il existe tout de même des déperditions thermiques qui, sur des grandes distances, provoquent une baisse de température permettant la formation de dépôts solides comme évoqué précédemment. L'isolation thermique passive ne donne donc pas entière satisfaction sur de grandes distances de transport.

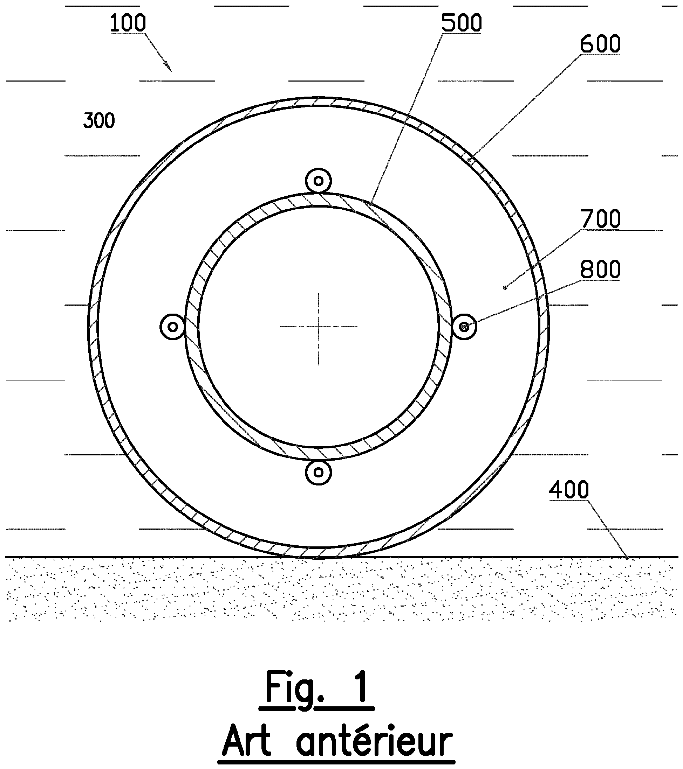

C'est ainsi que les structures telles que les PiP comprennent typiquement au moins un câble chauffant agencé au sein de l'espace périphérique destiné à chauffer momentanément ou de manière continue le tube interne. Ce type de dispositif chauffant est communément appelé ETH-PiP (pour « Electrically Trace Heated Pipe in Pipe » en langue anglaise). Un exemple de réalisation d'un tel dispositif chauffant est notamment schématisé sur la figure 1. Le dispositif (100) comprend notamment une conduite (500) immergée dans une étendue d'eau (300) et disposée sur le fond marin (400). Le dispositif (100) comprend également un tube externe (600) autour de la conduite (500) formant un espace périphérique (700) sur le pourtour de la conduite (500). Au sein de cet espace périphérique (700) est (sont) agencé(s) un ou plusieurs câbles chauffants (800) destiné(s) à chauffer la conduite (500) sur au moins une partie de sa longueur.

Dans ce type de configuration, la conduite (500) et le tube externe (600) définissent un espace périphérique (700) étanche dans lequel sont agencés les câbles chauffants (800). L'espace périphérique (700) comprend de l'air, du gaz ou du vide. Ainsi, les câbles chauffants (800) qui sont notamment destinés à fonctionner sous des températures comprises entre 20°C et 170°C sur au moins un cycle de 30 minutes, sont préservés de l'environnement extérieur par la conduite (500) et le tube externe (600) formant ensemble un espace périphérique (700) étanche.

Cependant, l'ETH-PiP s'avère être une solution coûteuse et la double enveloppe en acier de ce dispositif chauffant représente un poids relativement élevé qui rend l'installation difficile notamment sur de grandes profondeurs. Outre le poids de l'ETH-PiP, la double enveloppe en acier crée un ensemble volumineux particulièrement rigide difficilement manipulable par les moyens conventionnels de pose. La double enveloppe restreint donc les capacités de pose à des conduites possédant des diamètres externes d'environ 45 cm (18 pouces) ou 48 cm (19 pouces).

Une solution alternative est décrite par exemple dans le document US 6, 940, 054. Ce document décrit un dispositif chauffant comprenant une conduite isolée thermiquement communément appelée ETH-SP (pour «Electrically Trace Heated Single Pipe» en langue anglaise). La conduite comprend une enveloppe externe isolante thermiquement plus légère que le tube externe en acier destinée à réduire les échanges thermiques avec le milieu environnant. Cette enveloppe externe isolante thermiquement comprend au moins une couche d'isolants en polychlorure de vinyle (PVC) agencée sur le pourtour de la conduite. La couche d'isolants en PVC forme des canaux définissant un espace périphérique sur le pourtour de la conduite. Au sein de ces canaux sont agencés des moyens de chauffage destinés à chauffer la conduite. Selon le document US 6, 940, 054 les moyens de chauffage se présentent sous la forme de tubes dans lesquels un fluide chaud circule apportant de la chaleur à la conduite. Une alternative selon cet art antérieur consiste en des moyens de chauffage se présentant sous la forme de câbles chauffants agencés au sein de l'espace périphérique.

A l'image de l'espace périphérique de l'ETH-PiP, l'espace périphérique de l'ETH-SP, notamment délimité par l'enveloppe externe isolante thermiquement en PVC et la conduite doit être dépourvu d'eau. Pour cela, l'installation de ce type de conduite est réalisé à l'aide de moyens de pose spécifiques et complexes compatibles avec l'enveloppe externe en PVC particulièrement fragile par rapport à une enveloppe externe en acier telle qu'employée dans une conduite de type PiP.

En effet, l'enveloppe externe isolante thermiquement en PVC par exemple, est nettement moins résistante que le tube externe en acier de l'ETH-PiP. Durant une installation classique, la conduite est passée au travers des moyens de pose conventionnels, exerçant des efforts de serrage sur l'enveloppe externe à la conduite, tels que des tensionneurs ou des colliers de serrage. La force de serrage appliquée à la conduite et notamment à l'enveloppe externe isolante thermiquement a tendance à fragiliser cette dernière. Aussi, l'enveloppe externe isolante thermiquement subit des chocs lorsque la conduite atteint le fond marin. La conduite subit donc des contraintes qui ont tendance à fragiliser voire détériorer l'enveloppe externe isolante thermiquement. Par conséquent, des fissures au sein de cette enveloppe peuvent se former et de l'eau provenant de l'étendue d'eau peut s'infiltrer et inonder l'espace périphérique. La présence d'eau au sein de l'espace périphérique détériore les performances isolantes de l'enveloppe externe isolante thermiquement. Par ailleurs, cette infiltration d'eau pose un problème significatif pour le chauffage des conduites au moyen de câbles chauffants.

En effet, les câbles chauffants conventionnels comprennent un élément électrique interne configuré pour générer une énergie thermique principalement par Effet Joule lorsqu'il est soumis à un courant électrique et une couche externe d'isolation électrique. La couche externe d'isolation électrique comprend typiquement un polymère pouvant être par exemple un polyéthylène réticulé ou non réticulé. Sous l'effet d'une température élevée liée notamment à la température des hydrocarbures en sortie de puits, cette couche externe d'isolation électrique a tendance à se dégrader par thermolyse ou par thermo-oxydation et *in fine* à perdre ses propriétés de résistance diélectrique. Aussi, la couche externe d'isolation électrique est soumise à des champs électriques supérieurs à 1 kV/m générateurs de décharges partielles et de chemins préférentiels de fuite de courant générant une arborescence d'eau (dites « water tree » en langue anglaise) ou une arborescence électrique (dites « electrical tree » en langue anglaise) au travers de l'isolant entrainant l'érosion ou l'oxydation de la couche externe d'isolation électrique.

Par ailleurs, en présence d'eau notamment saline et sous forte pression l'hydrolyse de la couche externe d'isolation électrique est d'autant plus favorisée.

En outre, la couche externe d'isolation électrique présente généralement des irrégularités de surface et/ou des défauts liés au procédé de fabrication de cette couche. Ces défauts et irrégularités constituent en présence d'eau des amorces dans lesquels l'eau peut s'infiltrer. L'hydrolyse ou l'intrusion d'eau conduisent aux développements de fissurations prématurées de la couche externe d'isolation électrique. La couche externe d'isolation électrique n'assure donc plus son rôle d'isolant électrique et le chauffage de la conduite n'est rapidement plus assuré.

Il existe donc un besoin de fournir un dispositif chauffant pour le transport d'un mélange multiphasique d'hydrocarbures léger, peu coûteux, installable par des moyens de pose conventionnels, et apte à délivrer une énergie thermique sur une durée pouvant atteindre 20 ans dans un environnement sous-marin.

DE 10 2014 005 093 décrit un tube chauffé disposé dans un véhicule automobile. EP 2 520 839 et WO 2009/063980 décrivent des conduites de transport de fluide avec un annulaire comprenant des éléments chauffants.

### Divulgation de l'invention

A cet effet, l'invention a pour objet un ensemble selon la revendication 1.

Les dispositifs de l'art antérieur ne semblaient pouvoir fonctionner après leur installation par des moyens de pose conventionnels compte tenu de la présence d'eau au sein de l'espace périphérique responsable de la dégradation des performances d'isolation thermique du dispositif. Face à cet état de fait, l'homme du métier aurait cherché à bénéficier d'une enveloppe externe isolante thermiquement résistante aux chocs et aux efforts subis durant l'installation afin de bénéficier d'un espace périphérique étanche et donc d'un dispositif chauffant fonctionnel. A l'encontre des préjugés techniques liés aux performances isolantes lorsque l'espace périphérique comprend de l'eau, les travaux de la Demanderesse ont permis de mettre en évidence que le dispositif chauffant objet de l'invention comprenant un espace périphérique comprenant de l'eau était compatible avec les performances isolantes attendues d'un tel dispositif.

Par ailleurs, alors que l'homme du métier est fortement dissuadé d'utiliser d'une manière générale des câbles électriques dans un environnement où ils pourraient être en contact avec de l'eau, les câbles chauffants de la Demanderesse sont dénués d'enveloppe rigide d'étanchéité laissant la couche principale d'isolation électrique en contact direct avec l'eau de mer. En effet, les travaux de la Demanderesse ont permis de mettre en évidence que les propriétés de résistance diélectrique des polymères organiques fluorés sont préservées lorsqu'ils sont en contact avec de l'eau pendant une durée d'au moins 20 ans et lorsqu'ils sont soumis à des pics de température d'au moins 30 minutes compris entre 20 °C et 170°C. Aussi, alors que la température favorise la dégradation des couches polymériques dans de telles conditions, les polymères organiques fluorés sont particulièrement résistants lorsqu'ils sont soumis à de telles températures et ceci même sous une pression comprise entre 10 bar et 500 bar et plus particulièrement entre 200 bar et 500 bar. A l'encontre des préjugés techniques liés à l'utilisation de câbles dans ces conditions, les câbles chauffants selon l'invention sont compatibles avec les conditions de pression, de température, d'humidité et de durée d'utilisation liées à l'exploitation pétrolière offshore.

Grâce au ensemble de la présente invention, il est désormais possible de bénéficier d'un dispositif chauffant pour le transport d'un mélange multiphasique hydrocarbures léger, peu coûteux, installable par des moyens de pose conventionnels et compatible avec un environnement sous-marin.

Par ailleurs, l'ensemble selon l'invention peut comprendre une ou plusieurs des caractéristiques suivantes, prise(s) isolément ou suivant toute combinaison techniquement possible.

Selon une caractéristique avantageuse de l'invention favorisant la tenue mécanique de la couche principale d'isolation électrique pendant une durée d'au moins 20 ans notamment sous des pressions de fonctionnement comprise entre 10 bar et 500 bar, plus particulièrement entre 200 bar et 500 bar et sous des pics de température d'au moins 30 minutes compris entre 20°C et 170°C et notamment entre 100°C et 170°C, ladite couche principale d'isolation électrique possède une épaisseur d'au moins 1 mm, avantageusement d'au moins 10 mm, encore plus avantageusement d'au moins 100 mm.

Selon une caractéristique avantageuse de l'invention permettant d'améliorer le chauffage de ladite structure, ledit au moins un câble chauffant comprend au moins une couche supplémentaire.

Selon une caractéristique avantageuse de l'invention permettant d'assurer la pérennité de ladite couche supplémentaire pendant une durée d'au moins 20 ans notamment sous des pressions de fonctionnement comprises entre 10 bar et 500 bar, plus particulièrement entre 200 bar et 500 bar et sous des pics de température d'au moins 30 minutes compris entre 20°C et 170°C et notamment entre 100°C et 170°C , ladite au moins une couche supplémentaire comprend un polymère organique fluoré.

Selon une caractéristique avantageuse de l'invention permettant l'homogénéisation des champs électriques au sein de la couche principale d'isolation électrique, ladite au moins une couche supplémentaire comprend des particules conductrices.

Avantageusement, ladite au moins une couche supplémentaire est disposée entre ledit au moins un élément électrique interne et ladite couche principale d'isolation électrique ou autour de ladite couche principale d'isolation électrique. Ainsi, ladite couche supplémentaire en plus des fonctions électriques qu'elle peut remplir lorsque celle-ci est chargée en particules conductrices, peut avantageusement renforcer la tenue mécanique de la couche principale d'isolation électrique et sa cohésion avec la couche principale d'isolation électrique.

Les polymères organiques fluorés permettant tout particulièrement d'atteindre le but de l'invention sont choisis parmi l'éthylène tétrafluoroethylène (ETFE), le perfluoroalkoxy (PFA), l'éthylène propylène fluoré (FEP), le polytetrafluoroethylène (PTFE) ou leurs mélanges.

Selon une caractéristique avantageuse de l'invention ledit polymère organique fluoré comprend une reprise volumique d'eau inférieure à 1%, inférieure à 0.5% et de manière préférée inférieure à 0.1% selon la norme ASTM D570. La faible reprise volumique des polymères organiques fluorés favorise notamment la résistance à l'eau de la couche principale.

Selon une caractéristique avantageuse de l'invention permettant d'optimiser les propriétés d'isolation électrique de la couche principale d'isolation électrique, ladite couche principale d'isolation électrique comprend au moins 50% en masse de polymère organique fluoré, préférentiellement au moins 70% en masse de polymère organique fluoré, avantageusement exclusivement un polymère organique fluoré.

Selon un mode de réalisation particulier de l'invention permettant le transport d'un mélange multiphasique d'hydrocarbures au sein d'une structure légère tout en étant chauffée dans des conditions où le câble chauffant est en contact avec l'eau salée et soumis à des pressions de fonctionnement comprises entre 10 bar et 500 bar, plus particulièrement entre 200 bar et 500 bar et à des pics de températures d'au moins 30 minutes compris entre 20°C et 170°C et notamment entre 100°C et 170°C pendant une durée d'au moins 20 ans, le dispositif comprend :
- au moins une conduite immergée dans une étendue d'eau apte à acheminer un mélange multiphasique d'hydrocarbures ;
- une enveloppe isolante thermiquement comprenant :
- au moins un canal s'étendant sur au moins une partie de la conduite ;
- ledit au moins un espace périphérique étant agencé au sein dudit au moins un canal.

Avantageusement, ladite enveloppe isolante thermiquement comprend au moins deux parties adjacentes formant au moins un canal longitudinal.

Selon un mode de réalisation particulier de l'invention permettant de confiner la chaleur délivrée à ladite structure et ainsi d'éviter les déperditions thermiques conduisant à une baisse de la température du mélange multiphasique d'hydrocarbures, le dispositif chauffant comprend :
- au moins une conduite immergée dans une étendue d'eau apte à acheminer un mélange multiphasique d'hydrocarbures ;
- au moins une couverture amovible disposée en regard de la conduite comprenant une face interne en regard de ladite conduite ;
- ladite face interne comprend au moins un canal s'étendant sur au moins une partie de la longueur de ladite au moins une couverture amovible ;
- ledit au moins un espace périphérique est agencé au sein dudit au moins un canal.

Selon un mode de réalisation particulier de l'invention, ladite structure comprend un moyen de collecte et/ou de distribution d'un mélange multiphasique d'hydrocarbures.

Grâce à la présente invention, les câbles chauffants peuvent fonctionner sans enveloppe d'étanchéité externe permettant de préserver l'élément électrique interne de l'eau. La couche principale d'isolation électrique en fluoropolymère est particulièrement résistante à l'eau. Les propriétés de cette dernière sont préservées au contact de l'eau et l'élément électrique interne reste fonctionnel dans ces conditions. Ainsi, grâce à la présente invention, une telle structure peut désormais bénéficier d'un chauffage actif permettant une circulation efficace d'un mélange multiphasique d'hydrocarbures tout en étant légère et peu coûteuse.

L'invention a également pour objet un procédé de mise en oeuvre du dispositif chauffant pour le transport d'un mélange multiphasique d'hydrocarbures comprenant les étapes suivantes :
- (a) fournir une structure apte à acheminer un mélange multiphasique d'hydrocarbures comprenant au moins un espace périphérique perméable à l'eau agencé sur le pourtour de ladite structure ;
- (b) fournir au moins un câble chauffant en :
- (b1) fournissant au moins un élément électrique interne configuré pour générer une énergie thermique lorsqu'il est soumis à un courant électrique ;
- (b2) agençant au moins une couche principale d'isolation électrique autour dudit au moins un élément électrique interne (81), ladite couche comprenant un polymère organique fluoré configuré pour former une enveloppe résistante à ladite eau autour dudit au moins un élément électrique interne ;
- (c) agencer ledit au moins un câble chauffant au sein dudit au moins un espace périphérique ;
- (d) immerger ladite structure au sein d'une étendue d'eau.

Les procédés de mise en oeuvre des dispositifs chauffants selon l'art antérieur comprennent la fourniture d'une double enveloppe en acier difficile à mettre en place compte tenu de son poids, de son volume et de la rigidité de la double enveloppe en acier et représentent un coup économique important. Le procédé selon l'invention permet de s'affranchir d'une double enveloppe en acier tout en bénéficiant d'un chauffage actif des structures sous-marines. Désormais, grâce au procédé de la présente invention, il est possible de fournir un dispositif allégé, peu coûteux et bénéficiant d'un chauffage actif.

### Description des figures

L'invention sera mieux comprise à la lecture de la description qui suit, donnée uniquement à titre d'exemple, et faite en se référant aux dessins annexés sur lesquels :
- la figure 1 est une vue schématique en coupe transversale d'un dispositif chauffant selon l'art antérieur,
- la figure 2 est une vue schématique en coupe transversale d'un dispositif chauffant selon l'invention,
- la figure 3 est une vue schématique en coupe transversale d'un câble chauffant équipant le dispositif objet de l'invention,
- la figure 4 est une vue schématique en coupe transversale d'un câble chauffant équipant le dispositif objet de l'invention selon un premier mode particulier de réalisation du câble,
- la figure 5 est une vue schématique en coupe transversale d'un câble chauffant équipant le dispositif objet de l'invention selon un troisième mode particulier de réalisation du câble,
- la figure 6 est une vue schématique en coupe transversale d'un câble chauffant équipant le dispositif objet de l'invention selon un quatrième mode particulier de réalisation du câble,
- la figure 7 est une vue schématique en coupe longitudinale d'un élément d'un câble chauffant équipant le dispositif objet de l'invention,
- la figure 8 est une vue schématique en coupe transversale du dispositif chauffant selon un premier mode particulier de réalisation de l'invention,
- la figure 9 est une vue schématique en coupe transversale du dispositif chauffant selon un deuxième mode particulier de réalisation de l'invention,
- la figure 10 est une vue schématique en perspective du dispositif chauffant selon un troisième mode particulier de réalisation de l'invention.

### Modes préférés de réalisation de l'invention

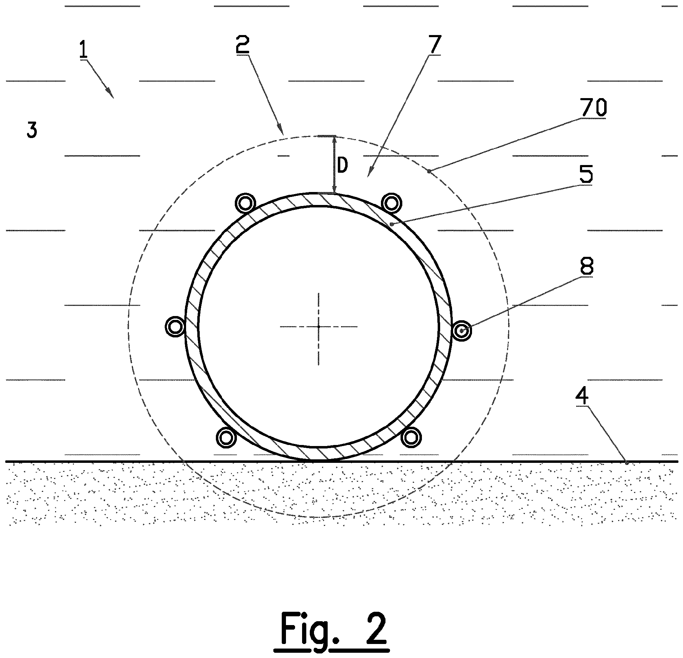

Un dispositif chauffant (1) pour le transport d'un mélange multiphasique d'hydrocarbures selon l'invention est illustré schématiquement par la figure 2 et les figures 8 à 10.

Le dispositif chauffant (1) pour le transport d'un mélange multiphasique d'hydrocarbures comprend une structure (2) immergée dans une étendue d'eau (3) apte à acheminer un mélange multiphasique d'hydrocarbures.

La structure (2) peut reposer par exemple sur le fond (4) de l'étendue d'eau (3), être ensouillée ou s'étendre à travers l'étendue d'eau (3) depuis le fond (4) vers la surface. L'étendue d'eau (3) peut être par exemple un fleuve, un lac, une mer ou un océan. La profondeur de l'étendue d'eau (3) est généralement supérieure à 10m et est par exemple comprise entre 200m et 5000m. La structure (2) peut donc être soumise à une pression hydrostatique d'au moins 10 bar et plus généralement comprise entre 200 bar et 500 bar. La structure (2) est destinée à être immergée pendant une durée d'au moins 20ans. Par ailleurs, lorsque la structure (2) est située dans une mer ou un océan, celle-ci réside dans un environnement particulièrement corrosif compte tenu de la teneur en sel.

Au sens de la présente invention, la structure (2) peut comprendre une conduite (5) ou un ensemble de conduites (5) destiné(e) au transport d'un mélange multiphasique d'hydrocarbures depuis une installation sous-marine tel qu'un puit vers une unité ou une installation de surface. L'unité ou l'installation de surface peut notamment être une unité flottante de production, de stockage et de déchargement appelée FPSO (« Floating Production, Storage and Offloading » en langue anglaise) ou une unité flottante dédiée au gaz naturel liquéfié appelée FLNG (« Floating Liquefied Natural Gas » en langue anglaise) ou encore une plateforme réservoir à point d'ancrage unique appelée SPAR (« Single Point Anchor Réservoir » en langue anglaise) ou encore une unité flottante semi-submersible appelée TLP (« Tension Leg Platform » en langue anglaise). La conduite (5) peut également s'étendre entre des installations sous-marines. La conduite (5) peut être du type rigide ou flexible.

En combinaison ou en alternative de la conduite (5), la structure (2) peut comprendre un moyen de collecte et/ou de distribution (11) d'un mélange multiphasique d'hydrocarbures tel qu'un collecteur (dit « manifold » en langue anglaise), une pompe, un séparateur ou tout autre équipement destiné au stockage et à la distribution d'un mélange multiphasique d'hydrocarbures dans le milieu pétrolier offshore.

Le dispositif chauffant (1) peut également comprendre une enveloppe isolante thermiquement (6) afin de limiter les échanges thermiques avec le milieu environnant et ainsi favoriser le chauffage de la structure (2), et en particulier de la conduite (5).

L'enveloppe isolante thermiquement (6) peut être du type fixe. Elle comprend alors au moins une couche d'au moins deux parties adjacentes (60) isolantes agencée sur la circonférence de la conduite (5). De manière alternative, l'enveloppe isolante thermiquement (6) peut être mobile et se présenter sous la forme d'une couverture amovible (10) disposée le long de la conduite (5) ou sur au moins une partie de sa longueur.

Par ailleurs, le gisement pétrolier et gazier comprend un mélange multiphasique d'hydrocarbures comprenant une phase gazeuse et au moins une phase liquide carbonée. Généralement, le gisement comprend également une phase liquide aqueuse et une phase solide comprenant des impuretés telles que du sable ou des sédiments. Ainsi, un mélange de phases gazeuses, de phases liquides et de phases solides ci-après dénommé de manière générique mélange multiphasique d'hydrocarbures circule à l'intérieur de la structure (2) à une température comprise entre 60°C et 200°C en sortie de puits et à une pression d'au moins 50 bar. La structure (2) assure la circulation d'un mélange multiphasique d'hydrocarbures dans ces conditions sur une période d'au moins 20 ans. La circulation peut être continue c'est-à-dire sans arrêt de circulation sur cette période ou momentanée c'est-à-dire avec des arrêts de circulation pouvant être plus ou moins long notamment de quelques heures à plusieurs semaines.

En outre, le dispositif chauffant (1) comprend au moins un espace périphérique (7) agencé sur le pourtour de ladite structure (2).

De manière générale, l'espace périphérique (7) est compris entre la surface externe de la structure (2) et une enveloppe fictive (70) distante d'une distance D de la surface externe de la structure (2) dans une direction extérieure par rapport à la structure (2). La distance D est généralement comprise entre 6 cm et 100 cm, préférentiellement comprise entre 6 cm et 15 cm.

Ledit au moins un espace périphérique (7) est perméable à l'eau de l'étendue d'eau (3) et comprend ainsi de l'eau de l'étendue d'eau (3) lorsque le dispositif chauffant (1) est immergé au sein de l'étendue d'eau (3). Lorsque l'étendue d'eau (3) est de l'eau de mer ou d'océan celle-ci comprend une teneur en sel comprise entre 30 g/l et 40 g/l. L'espace périphérique (7) est également soumis à une pression hydrostatique d'au moins 10 bar, généralement comprise entre 200 bar et 500 bar.

Par ailleurs, le dispositif chauffant (1) comprend au moins un câble chauffant (8) agencé au sein dudit au moins un espace périphérique (7).

Au sens de la présente invention, il est entendu par câble chauffant, un câble électrique moyenne, haute tension comprenant au moins un élément électrique interne (81) et au moins une couche principale d'isolation électrique (80).

Par moyenne tension, haute tension il est entendu au sens de la présente invention une tension aux bornes d'un câble électrique au moins supérieure à 1 kV. Les câbles moyenne tension sont généralement configurés pour opérer sous une tension à leurs bornes comprise entre 1 kV et 50 kV et les câbles haute tension sont typiquement configurés pour opérer sous une tension à leurs bornes supérieure à 50 kV.

Plus précisément, la tension appliquée au câble chauffant (8) dépend de la distance de la structure (2) devant bénéficier du chauffage et du type de signal injecté, courant continu ou courant alternatif. En l'espèce, le câble chauffant (8) est soumis à une tension à ses bornes d'au moins 1 kV.

Par ailleurs, l'intensité du courant traversant le câble chauffant (8) est typiquement comprise entre 0.1 A et 320 A.

La puissance consommée est généralement comprise entre 50 W/m et 200 W/m.

Le câble chauffant (8) peut être alimenté en courant continu ou en courant alternatif monophasé ou triphasé.

En particulier, le câble chauffant (8) est alimenté par une source d'alimentation située à la surface de l'étendue d'eau (3) sur le FPSO par exemple et le courant électrique peut être transmis au câble chauffant (8) par le biais d'un ombilical. Généralement l'ombilical comprend à proximité du câble chauffant (8) un point de contact avec l'eau de l'étendue d'eau (3) permettant de collecter vers la source d'alimentation électrique les courants de fuite et les courants de défaut liés à des défauts d'isolation électrique du câble chauffant (8) généralement compris entre 1 mA/m et 10 mA/m. Le point de contact est par exemple situé à une distance inférieure à 500 m par rapport à l'extrémité du câble chauffant (8) et peut par exemple être une anode.

Alternativement, la conduite (5) comprend une partie montante (appelée « riser » en langue anglaise) s'étendant jusqu'à l'installation ou l'unité de surface. Le câble chauffant (8) peut dans ce cas s'étendre le long de cette partie montante jusqu'à l'installation de surface et peut être directement relié à une source d'alimentation située sur le FPSO.

Généralement, le câble chauffant (8) opère lors des arrêts de production ou lors des phases transitoires entre les arrêts de production et la production. Le câble chauffant (8) peut également opérer lorsque la production est en cours, c'est-à-dire pendant la circulation du mélange multiphasique d'hydrocarbures.

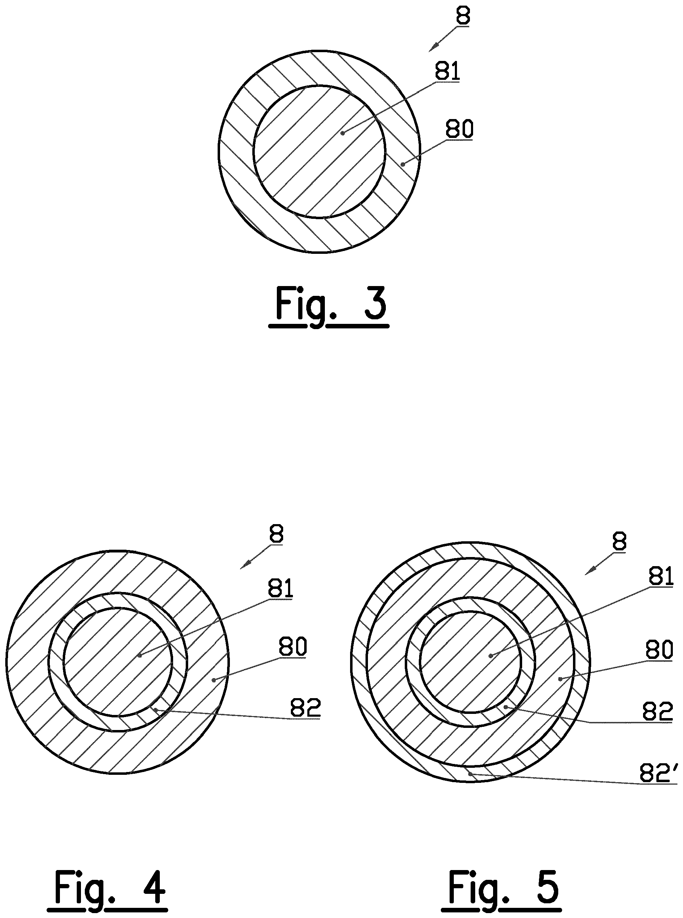

Comme préalablement cité et notamment représenté sur la figure 3, le câble chauffant (8) comprend au moins un élément électrique interne (81) configuré pour générer une énergie thermique lorsqu'il est soumis à un courant électrique et au moins une couche principale d'isolation électrique (80).

L'élément électrique interne (81) également appelé « toron » comprend un ensemble d'éléments conducteurs tels que des fils métalliques. Les fils métalliques sont préférentiellement constitués d'alliage à base d'aluminium et/ou de cuivre. La surface extérieure de l'élément électrique interne (81) peut également comprendre une couche d'étain afin de préserver l'intégrité de l'élément électrique interne (81) durant une période d'au moins 20 ans.

Typiquement, l'élément électrique interne (81) comprend un ensemble de 6 à 500 fils, voire de 600 fils, voire de 800 fils. Le nombre de fils est notamment choisi en fonction du besoin de flexibilité du câble chauffant (8) pour son installation, des caractéristiques de résistance linéique et des capacités de tréfilage. Pour des éléments électriques internes (81) de même section, un grand nombre de fils de faible diamètre est privilégié par rapport à un faible nombre de fils de diamètre supérieur afin de limiter les interstices entre les fils et d'optimiser la régularité et la rotondité de la surface extérieure de l'élément électrique interne (81). Ainsi, le nombre de fils formant l'élément électrique interne (81) est typiquement supérieur à 100.

L'élément électrique interne (81) peut être du type simple, segmenté, compact, creux ou tressé. De manière préférée, l'élément électrique interne (81) est du type compact afin d'optimiser la régularité et la rotondité de l'élément électrique interne (81).

Le taux de compacité de l'élément électrique interne (81) est avantageusement d'au moins 60%, préférentiellement d'au moins 80% et encore plus avantageusement d'au moins 90%. Le taux de compacité est notamment définit comme le rapport de sections des fils constituant l'élément électrique interne (81) à la section du cercle circonscrit à l'élément électrique interne (81).

Le câble chauffant (8) est soumis à une pression hydrostatique comprise entre 10 bar et 500 bar et plus particulièrement entre 200 bar et 500 bar. Le taux de compacité permet de limiter voire de s'affranchir des risques d'effondrement de l'élément électrique interne (81) sous de telles pressions. Ainsi, en améliorant l'architecture de l'élément électrique interne (81) et notamment sa régularité et sa rotondité, la tenue en pression de l'élément électrique interne (81) est optimisée. Aussi, les risques de fluage de la couche principale (80) qui entoure l'élément électrique interne (81) sont amoindris.

Typiquement, la section de l'élément électrique interne (81) est dimensionnée de manière à générer une énergie thermique suffisante principalement par Effet Joule lorsque l'élément électrique interne (81) est soumis à un courant électrique. La section de l'élément électrique interne (81) est par exemple comprise entre 0.5 mm² et 75 mm². Une telle section permet notamment de générer une résistance linéique comprise entre 0.01 mOhm/m et 20 mOhm/m. Préférentiellement, la section de l'élément électrique interne (81) est comprise entre 6 mm² et 25 mm².

L'énergie thermique est transférée sous forme de chaleur au milieu environnant et notamment à la structure (2) et par son intermédiaire au mélange multiphasique d'hydrocarbures. En résulte notamment une fusion des dépôts solides et/ou une élévation de température du mélange multiphasique d'hydrocarbures pouvant être comprise entre 2°C, température à laquelle les blocs de glace se résorbent et 65°C, température à laquelle les paraffines sont fluidifiées. La température de fusion des hydrates est généralement comprise entre 20°C et 30°C.

S'agissant de la couche principale d'isolation électrique (80), celle-ci est notamment en contact avec l'eau de l'étendue d'eau (3). La couche principale d'isolation électrique (80) est également soumise à la pression hydrostatique comprise entre 10 bar et 500 bar, plus particulièrement entre 200 bar et 500 bar et à des températures comprises entre 20°C et 170°C.

La couche principale d'isolation électrique (80) est configurée pour former une enveloppe résistante à l'eau autour de l'élément électrique interne (81), et elle comprend un polymère organique fluoré permettant de répondre aux conditions à laquelle elle est soumise.

Par polymère organique fluoré, il est entendu tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

Les polymères organiques fluorés ont la propriété de résister à des températures pouvant aller jusqu'à 170°C voire 200°C. Et de manière inattendue il a été mis en évidence par la Demanderesse qu'au contact de l'eau et dans ces conditions de températures, les polymères organiques fluorés conservaient leur intégrité et leur propriétés diélectriques pendant une durée d'au moins 20 ans contrairement aux polymères de l'art antérieur qui ont tendance à se dégrader dans de pareilles conditions. La couche principale d'isolation électrique (80) est ainsi un isolant électrique remarquable en ce qu'elle est résistante à l'eau. Par résistante à l'eau, il est entendu que la couche principale d'isolation électrique (80) minimise l'infiltration d'eau par perméation au sein de la couche principale d'isolation électrique (80) et ceci même sous des températures comprises entre 20°C et 170°C et des pressions comprises entre 10 bar et 500 bar, plus particulièrement entre 200 bar et 500 bar pendant une durée d'au moins 20 ans.

Avantageusement, le polymère organique fluoré comprend une reprise volumique d'eau inférieure à 1%, inférieure à 0.5% et de manière préférée inférieure à 0.1 % selon la norme ASTM D570.

Avantageusement, la couche principale d'isolation électrique (80) comprend au moins 50% en masse de polymère organique fluoré, préférentiellement au moins 70% en masse de polymère organique fluoré et de manière préférée exclusivement un polymère organique fluoré.

De manière préférée, le polymère organique fluoré est choisi parmi l'éthylène tétrafluoroéthylène (ETFE), le perfluoroalkoxy (PFA), l'éthylène propylène fluoré (FEP), le polytetrafluoroethylène (PTFE) ou leurs mélanges.

La couche principale d'isolation électrique (80) comprend lorsqu'elle ne comprend pas exclusivement un polymère organique fluoré, un mélange de polymère organique fluoré et de polymère thermoplastiques tels que du polyéthylène (PE) ou du polyamide (PA).

La couche principale d'isolation électrique (80) peut comprendre des additifs usuels tels que des charges anti-oxydantes ou anti-UV ou tout autre type d'additif convenant à l'application visée. Toutefois, la stabilité chimique des matières fluorées précédemment citées est particulièrement avantageuse et ne nécessite généralement pas d'additifs.

Avantageusement, la couche principale d'isolation électrique (80) possède une épaisseur d'au moins 1 mm, préférentiellement une épaisseur d'au moins 10 mm, encore plus avantageusement une épaisseur d'au moins 100 mm. L'épaisseur de la couche principale d'isolation électrique (80) favorise sa tenue en température et prévient ou au moins minimise le gonflement et/ou l'hydrolyse de la couche principale d'isolation électrique (80) au contact de l'eau. Aussi, une telle épaisseur permet la tenue mécanique de la couche principale d'isolation électrique (80). En effet, lorsque l'élément électrique interne (81) présente des irrégularités de surface, la couche principale d'isolation électrique (80) a tendance à fluer au sein de ces irrégularités et à ne plus assurer son rôle d'isolant électrique. Lorsque l'épaisseur de la couche principale d'isolation électrique (80) est d'au moins 1 mm une partie de la couche principale d'isolation électrique (80) peut fluer au sein des irrégularités, la deuxième partie de l'épaisseur n'ayant pas flué assure l'isolation électrique de l'élément électrique interne (81).

La couche principale d'isolation électrique (80) est préférentiellement obtenue par extrusion. Les vitesses d'extrusion et de refroidissement de la couche principale d'isolation électrique (80) sont suffisamment lentes pour optimiser la compacité du matériau et pour permettre la création de chaines fluorées longues tout en minimisant le risque de formation de bulles d'air dans le polymère organique fluoré. La vitesse d'extrusion (dites « Melt Flow Rate » en langue anglaise) est par exemple comprise entre 0.5 g/10min et 8 g/10min.

La température d'extrusion est supérieure au point de fusion du polymère organique fluoré. Généralement, la température d'extrusion est comprise entre 260°C et 330°C.

Le taux de cristallinité du polymère organique fluoré est avantageusement supérieur à 40%.

La résistivité volumique de la couche principale d'isolation électrique (80) est supérieure à 1 Gohm par kilomètre de câble selon la norme ASTM D257.

En outre, le câble chauffant (8) peut comprendre une couche supplémentaire (82).

La couche supplémentaire (82) peut par exemple comprendre un polymère thermoplastique tel que du polyéthylène ou un polypropylène.

De manière préférée, la couche supplémentaire (82) comprend un polymère organique fluoré. Avantageusement, le polymère organique fluoré est choisi parmi les polymères organiques fluorés composant la couche principale d'isolation électrique (80).

La couche supplémentaire (82) peut également comprendre des particules conductrices comme du noir de carbone, des particules métalliques ou des graphites destinées à assurer la fonction semi-conductrice de la couche supplémentaire (82) et ainsi d'homogénéiser les champs électriques autour de l'élément électrique interne (81) et donc de réduire les contraintes induites au sein de la couche principale d'isolation électrique (80).

Avantageusement, la résistivité de la couche supplémentaire (82) comprenant un polymère organique fluoré et chargée en particules conductrices est typiquement comprise entre 5 Ohm.cm et 50 Ohm.cm selon la norme ASTM D257. La couche supplémentaire (82) selon l'invention, permet ainsi une meilleure répartition des champs électriques.

Généralement, l'épaisseur de la couche supplémentaire (82) est comprise entre 0.1 mm et 0.8 mm.

Dans un premier mode particulier de réalisation du câble chauffant (8) représenté sur la figure 4, la couche supplémentaire (82) est disposée entre l'élément électrique interne (81) et la couche principale d'isolation électrique (80).

La couche supplémentaire (82) permet de compenser les irrégularités de surface externe de l'élément électrique interne (81). Dans ce cas, la couche supplémentaire (82) possède donc une épaisseur au moins égale à la hauteur de ces irrégularités. Généralement, cette épaisseur est comprise entre 0.2 mm et 0.4 mm.

Dans un second mode particulier de réalisation du câble chauffant (8) non représenté, la couche supplémentaire (82) est disposée autour de la couche principale d'isolation électrique (80).

Selon ce second exemple, la couche supplémentaire (82) garantit le transfert de charges électriques liées aux courants de fuites et de défauts vers le milieu marin.

Selon un troisième mode particulier de réalisation du câble chauffant (8) représenté sur la figure 5, le câble chauffant (8) comprend deux couches supplémentaires (82, 82'), une première couche supplémentaire (82) étant disposée entre l'élément électrique interne (81) et la couche principale d'isolation électrique (80) et une deuxième couche supplémentaire (82') étant disposée autour de la couche principale d'isolation électrique (80).

De manière bien connue de l'homme du métier, le câble chauffant (8) peut comprendre des renforts mécaniques (non représentés) agencés autour de la couche principale d'isolation électrique (80) ou de la couche supplémentaire (82) lorsque celle-ci est disposée autour de la couche principale d'isolation électrique (80). Les renforts mécaniques peuvent être par exemple des armures métalliques permettant de reprendre les efforts axiaux subis pendant l'installation du dispositif (1).

Préférentiellement et comme cela est visible sur la figure 2 et les figures 8 à 10 plusieurs câbles chauffants (8) peuvent être agencés sur le pourtour de la structure (2) afin d'optimiser son chauffage.

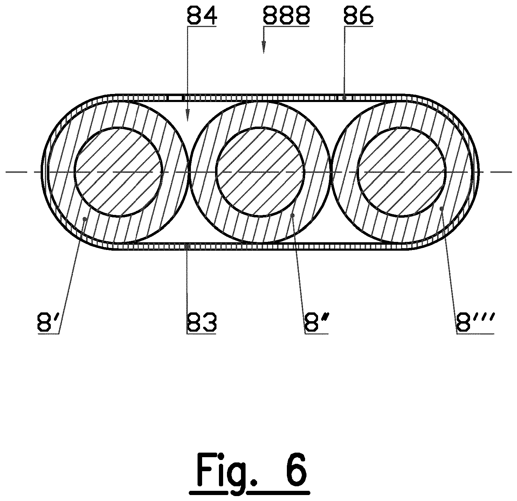

Avantageusement et comme représenté notamment sur la figure 6, plusieurs câbles chauffants (8',8",8‴) tels que ceux décrits précédemment peuvent être regroupés selon un seul faisceau (888).

Avantageusement, au moins trois câbles chauffants (8',8",8‴) sensiblement alignés sont regroupés selon un faisceau (888). Par sensiblement aligné, il est entendu que le centre de chaque câble chauffant du faisceau (888) est aligné selon un même axe avec un désalignement possible de quelques millimètres. Alternativement, les câbles chauffants (8',8",8'") peuvent être agencés de façon à former un faisceau (888) triangulaire.

Plus particulièrement, le faisceau (888) comprend au moins une gaine externe (83) permettant de solidariser les câbles chauffants (8',8",8'") en un seul faisceau (888).

Avantageusement la gaine externe (83) est polymérique. Le polymère comprend par exemple un thermoplastique tel qu'un polyamide (PA), un polyéthylène (PE) ou un polyfluorure de vinylidène (PVDF) ou un élastomère tel qu'un éthylène-propylène-diène monomère (EPDM).

L'épaisseur de la gaine externe (83) est généralement comprise entre 0.1 mm et 5 mm.

La gaine externe (83) comprend au moins un moyen d'infiltration (86) d'eau de ladite étendue d'eau (3). Avantageusement, plusieurs moyens d'infiltration (86) d'eau sont agencés sur la longueur de gaine externe (83) tous les 1 m, voire tous les 100 m ou tous les 500 m. Les moyens d'infiltration (86) sont notamment agencés le long de la gaine externe (83) de manière à ce que l'eau pénètre les interstices (84) lors de l'installation du dispositif (1) sans endommager ladite gaine externe (83) par érosion par exemple. Les moyens d'infiltration (86) d'eau peuvent être par exemple un perçage formé dans l'épaisseur de la gaine externe (83) tel que représenté sur la figure 6 ou tout autre moyen équivalent convenant à l'homme du métier permettant le passage de l'eau à travers la gaine externe (83).

Le regroupement en un seul faisceau (888) de plusieurs câbles chauffants (8) permet de réduire les couplages par champ magnétique entre les câbles chauffants (8) et entre les câbles chauffants (8) et la structure (2). En outre, le nombre de câbles chauffants (8) à installer est réduit par trois ce qui permet de les installer par des moyens conventionnels comme une spiraleuse. Ainsi, l'installation des câbles chauffants (8) est nettement facilitée.

Par ailleurs, les câbles chauffants (8) peuvent posséder une longueur supérieure à 10m, supérieure à 100 m, supérieure à 1 km voire supérieure à 4 km et s'étendent avantageusement sur toute la longueur de la structure (2) ou sur une partie de la structure (2) où un chauffage est nécessaire. Typiquement, les câbles chauffants (8) possèdent une longueur de 1.1 km correspondant à la longueur d'une section de conduite (5) (dites « stalk » en langue anglaise). Avantageusement la structure (2) peut comprendre plusieurs câbles chauffants (8) agencés en série sur au moins une partie voire sur toute la longueur de la structure (2). Les câbles chauffants (8) sont alors reliés par l'intermédiaire de connecteurs (85) tous les 100 m, 1 km voire tous les 4 km en fonction de la longueur du câble chauffant (8).

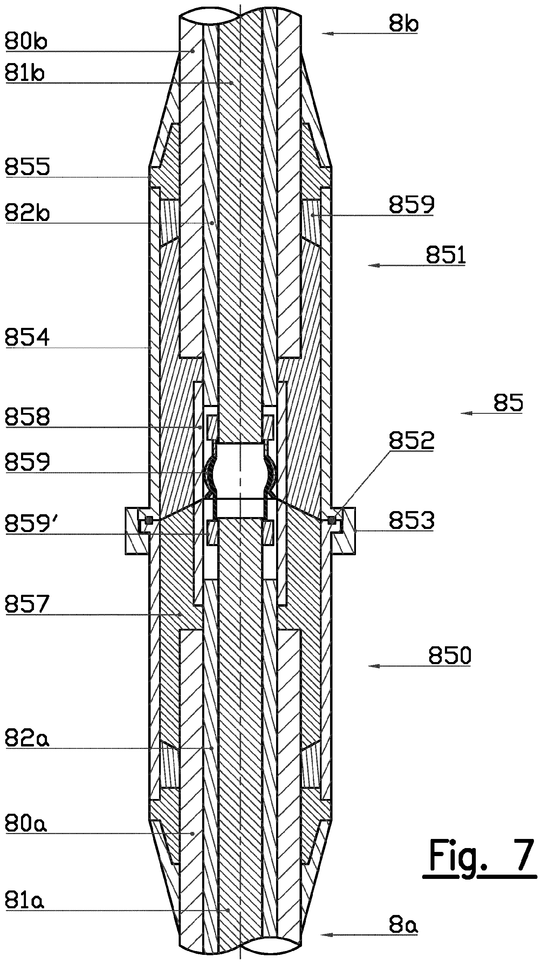

Un connecteur (85) reliant l'extrémité libre d'un câble chauffant (8a) à l'extrémité libre d'un câble chauffant adjacent (8b) est par exemple représenté sur la figure 7. Il comprend notamment une partie mâle (850) et une partie femelle (851) coopérant ensemble pour former le connecteur (85).

De manière préférée, la partie mâle (850) présente une surface conique de façon à minimiser les potentielles bulles d'air à l'interface des parties mâle (850) et femelle (851). Le risque de décharges partielles ou de chemins préférentiels de fuite de courant est ainsi limité.

Le connecteur (85) comprend en outre un moyen de fixation de la partie mâle (850) sur la partie femelle (851) par boulonnage sur bride, vissage, collage ou tout moyen de fixation connu de l'homme du métier. Plus particulièrement, lorsqu'il s'agit d'une fixation par vissage, le moyen comprend une bague de connexion (853) comprenant d'une part, un épaulement interne destiné à s'engager sur un épaulement externe aménagé respectivement sur la partie mâle (850) et femelle (851) et, d'autre part, un taraud destiné à s'engager sur un filetage aménagé sur la partie femelle (851) et sur la partie mâle (850), de manière à contraindre la partie mâle (850) contre la partie femelle (851) par vissage de la bague de connexion (853).

Compte tenu de l'environnement marin, un joint d'étanchéité (852) de type simple ou double peut être agencé entre la partie mâle (850) et femelle (851) afin de minimiser les risques d'infiltration d'eau.

Par ailleurs, le connecteur (85) comprend un moyen d'isolation électrique (857) ainsi qu'un moyen permettant de reprendre les efforts radiaux liés à la pression externe s'exerçant sur le connecteur (85). Ainsi, le connecteur (85) répond aux mêmes spécificités de tenue en pression, d'isolation électrique, et d'étanchéité que le câble chauffant (8).

Ainsi, le connecteur (85) comprend un boitier (854) en appui contre une bague métallique de serrage (855) agencé autour de l'extrémité libre du câble chauffant (8a, 8b). De manière préférée, le boîtier (854) est métallique et assure ainsi la tenue mécanique du connecteur (85). Le boîtier (854) est par exemple réalisé en acier inoxydable du type SS316L, Super Duplex ou Inconel 825 afin de résister à la corrosion.

En outre, l'isolant électrique (857) est par exemple une pièce moulée cylindrique agencée au sein du connecteur (85). L'isolant électrique (857) est agencé autour de l'extrémité libre de la couche principale d'isolation électrique (80a, 80b) du câble chauffant (8a, 8b) et est en contact avec l'élément électrique interne (81a, 81b). Préférentiellement, la couche supérieure isolante électriquement (857) est insérée au niveau d'une bague de fixation (859) conique fixée sur l'extrémité libre de la couche principale d'isolation électrique (80a, 80b). La couche supérieure isolante électriquement (857) est par exemple réalisée en un matériau thermoplastique tel qu'un polyetheretherketone (PEEK), ou élastomérique tel qu'un éthylène-propylène-diène monomère (EPDM) ou un HNBR voire un thermoplastique fluoré tel qu'un PTFE ou un élastomère fluorocarboné (FKM).

Avantageusement, et notamment lorsque le câble chauffant (8) comprend une couche supplémentaire (82), le connecteur (85) comprend un élément semi-conducteur (858) pouvant être par exemple une pièce moulée cylindrique, agencé au sein du connecteur (85).

Préférentiellement, la couche supplémentaire (82a, 82b) présente une sur longueur au niveau de l'extrémité libre du câble chauffant (8) autour de laquelle est agencé l'élément semi-conducteur (858). Ainsi, les couches supplémentaires (82a) et (82b) coopèrent facilitant la connexion électrique au sein du connecteur.

De la même manière, l'extrémité libre de l'élément électrique interne (81a, 81b) du câble chauffant (8a, 8b) comprend une sur longueur par rapport à la couche principale d'isolation (80a, 80b) facilitant ainsi la connexion électrique au niveau du connecteur (85).

Par ailleurs, la connexion électrique au sein du connecteur (85) permettant le passage du courant entre deux sections de câble chauffant (8a, 8b) reliées par l'intermédiaire du connecteur (85) peut être réalisée par tout moyen connu de l'homme du métier tel qu'une connexion par douille ou par lamelle. Par exemple, les parties mâle (850) et femelle (851) peuvent comprendre respectivement au moins une lame électrique (859) venant en prise sur une bague (859') agencée autour de l'élément électrique interne (81a, 81b) et assurant le passage du courant par contact entre les lames électriques (859). Avantageusement, les lames électriques (859) sont à base de cuivre.

La longueur du connecteur (85) est de manière préférée inférieure à 300 mm et son épaisseur est préférentiellement inférieure à 30 mm.

Enfin, la connexion entre la partie mâle (850) et la partie femelle (851) du connecteur (85) peut être réalisée à terre (dit « onshore » en langue anglaise) ou en mer.

D'autres modes particuliers de l'invention vont maintenant être décrits, donnés à titre indicatif mais non limitatif.

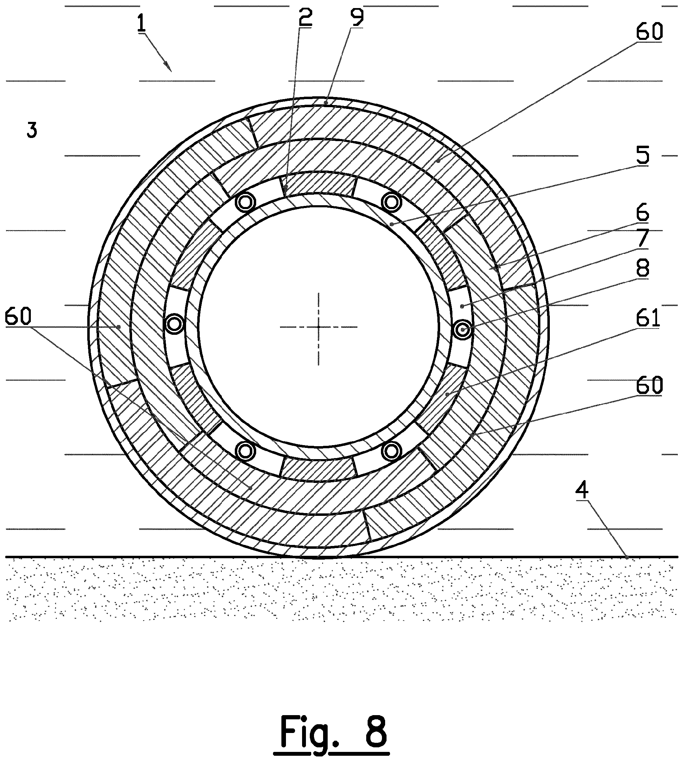

Selon un premier mode particulier de réalisation de l'invention représenté sur la figure 8 la structure (2) comprend une conduite rigide (5) apte à acheminer un mélange multiphasique d'hydrocarbures.

Une conduite rigide peut notamment être caractérisée par son rayon de courbure minimum (MBR pour « Minimum Bend Radius » en langue anglaise). Une conduite rigide possède typiquement un MBR de l'ordre de 8 m à 10 m. Un tel MBR permet de maintenir la conduite rigide à un seuil d'allongement inférieur à 3%.

La conduite rigide (5) comprend un tube métallique par exemple en acier, en acier inoxydable et en autre acier à teneur en Nickel variable, ou toute autre combinaison de ces matériaux. Typiquement, le tube métallique formant la conduite rigide (5) possède un diamètre interne compris entre 10 cm et 50 cm, voire supérieur selon les applications et une épaisseur comprise entre 5 mm et 100 mm, voire supérieure selon les applications.

La conduite rigide (5) peut également comprendre un revêtement interne (ou « liner » en langue anglaise) permettant de protéger le tube métallique du phénomène de corrosion. Par exemple, le revêtement interne peut être du type métallique résistant à la corrosion tel qu'un alliage du type 316L, Super 13cr, 22 Cr duplex, alliage 28, alliage 825, alliage 2550, alliage 625 ou tout autre alliage résistant à la corrosion. Typiquement, l'épaisseur du revêtement métallique est comprise entre 0,5 mm et 10 mm, voire supérieure.

Alternativement, le revêtement interne peut être du type polymérique. En particulier, le polymère est choisi parmi les thermoplastiques inertes vis-à-vis du mélange multiphasique d'hydrocarbures et résistants à la température tel que le polyéthylène réticulé (PEX). Typiquement, l'épaisseur du revêtement polymérique est comprise entre 0,5 mm et 50 mm, voire supérieure.

La conduite rigide (5) est destinée à être et/ou est immergée dans une étendue d'eau (3). Elle est donc en contact avec l'eau de l'étendue d'eau et le tube métallique est ainsi soumis à la corrosion. Ainsi, afin de prévenir la corrosion du tube métallique, la conduite rigide (5) est préférentiellement munie d'un revêtement extérieur de protection telle qu'une couche époxy liée par fusion ou une couche de polypropylène, comprise entre 2 mm et 5 mm. Une telle épaisseur permet notamment d'assurer l'intégrité de la couche de protection jusqu'à des températures de 130°C. Avantageusement, un moyen de protection de type cathodique par anode sacrificielle peut être prévue afin d'améliorer la protection anticorrosion de la conduite (5).

Le dispositif chauffant (1) peut en outre comprendre une enveloppe isolante thermiquement (6) disposée sur la circonférence de la conduite rigide (5).

Selon ce premier mode particulier de réalisation de l'invention représenté sur la figure 8, l'enveloppe isolante thermiquement (6) est du type fixe.

Plus particulièrement, l'enveloppe isolante thermiquement (6) comprend au moins une couche de deux parties adjacentes (60), généralement au moins une couche de 3 parties adjacentes agencées sur la circonférence de la conduite rigide (5). Ici, une couche de 4 parties adjacentes (60) est représentée.

Les parties adjacentes (60) comprennent un matériau isolant thermiquement tel qu'une polyoléfine ou un polyuréthane ou un mélange de matériau isolant. Lorsque l'enveloppe isolante (6) comprend une superposition de couches de parties adjacentes (60), elles peuvent comprendre des matériaux différents en fonction des couches. Les parties isolantes peuvent être droites ou en hélices.

L'épaisseur des parties adjacentes (60) est généralement comprise entre 10 mm et 90 mm.

L'enveloppe isolante (6) comprend en outre au moins un canal s'étendant sur au moins une partie de la conduite rigide (5).

Plus particulièrement, au moins deux parties adjacentes (60) peuvent former au moins un canal longitudinal.

Par ailleurs, l'enveloppe isolante (6) peut comprendre des parties disjointes (61) situées entre les parties adjacentes (60) et la conduite rigide (5). Les parties disjointes (61) comprennent un matériau isolant ou non isolant et sont disposées en hélices ou droites. Les parties disjointes (61) peuvent former au moins un canal longitudinal destiné à recevoir un câble chauffant (8).

Autour de l'enveloppe isolante (6) une couche de maintien (9) est enroulée par rubannage. La couche de maintien (9) est avantageusement constituée d'une bande non métallique destinée à maintenir les parties adjacentes (60) autour de la conduite rigide (5). La couche de maintien (9) est par exemple composée d'un polymère tel que du polyéthylène comprenant des renforts fibreux du type fibres d'aramide ou poly(p-phénylènetéréphtalamide (PPD-T). La largeur de la bande non métallique de la couche de maintien (9) est généralement comprise entre 50 mm et 400 mm et peut comprendre des zones de superposition d'une largeur comprise entre 0 mm et 320 mm soit une superposition comprise entre 0 % et 80%.

En outre, le dispositif chauffant (1) comprend un espace périphérique (7) agencé sur le pourtour de la conduite rigide (5). L'espace périphérique (7) est notamment agencé au sein du canal longitudinal et au moins un câble chauffant (8) selon l'invention y est agencé. Le câble chauffant (8) est en particulier enroulé en hélice au sein de l'espace périphérique (7) le long de la conduite rigide (5).

L'eau de l'étendue d'eau (3) peut diffuser au travers la couche de maintien (9) et s'infiltrer au sein de l'enveloppe isolante (6) et de l'espace périphérique (7). Les zones de superposition de la bande non métallique de la couche de maintien (9) participent à l'inertie de l'eau à l'intérieur de l'enveloppe isolante (6). Ainsi, l'eau est confinée et l'isolation de la conduite rigide (5) perdure malgré la diffusion d'eau. Les câbles chauffants (8) sont quant à eux en contact avec l'eau de l'étendue d'eau (8) infiltrée au sein de l'espace périphérique (7). La couche principale d'isolation électrique (80) en polymère organique fluoré forme une enveloppe isolante électrique étanche autour de l'élément électrique interne (81) et assure ainsi le fonctionnement des câbles chauffants (8) pendant une durée d'au moins 20 ans.

Par ailleurs, la bande de maintien (9) et/ou l'enveloppe d'isolation thermique (6) peut comprendre des moyens d'inondation pouvant par exemple être un orifice, une membrane poreuse ou une soupape débouchant au sein de l'espace périphérique (7). Plus précisément, les moyens d'inondation sont aménagés sur l'épaisseur de la bande de maintien (9) tous les 2m et répartis sur le pourtour de la structure (2) facilitant ainsi l'inondation de l'espace périphérique (7).

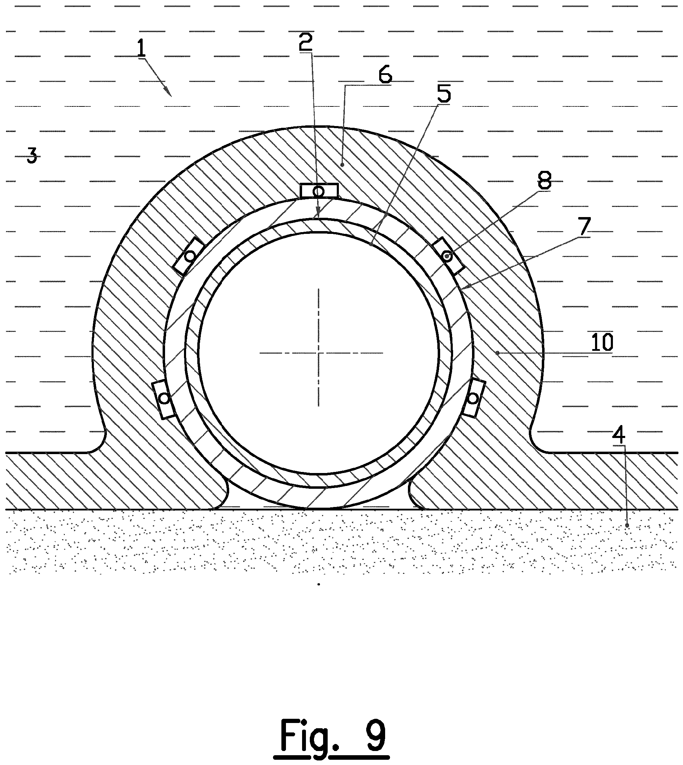

Selon un second mode particulier de réalisation de l'invention représentée sur la figure 9, comprenant une conduite rigide (5) immergée dans une étendue d'eau (3) apte à acheminer un mélange multiphasique d'hydrocarbures du type de celle décrite dans l'exemple précédent, l'enveloppe isolante thermiquement (6) est du type mobile. Plus particulièrement, l'enveloppe isolante thermiquement (6) comprend au moins une couverture amovible (10) disposée en regard de la conduite rigide (5), sur au moins une partie de la conduite rigide (5).

Typiquement, la couverture amovible (10) possède une épaisseur comprise entre 50 mm et 100 mm.

La couverture amovible (10) est adaptée pour permettre son enroulement et déroulement sans déformation plastique significative autour d'une bobine notamment en vue de son stockage sur une unité ou une plateforme de surface. La couverture amovible (10) peut être composée par exemple d'un matériau élastique comme un élastomère du type caoutchouc ou polyuréthane ou encore en mousse syntactique par exemple à base de polypropylène avec des microsphères de verre. De manière préférée, la couverture amovible (10) est isolante thermiquement. Elle présente par exemple une conductivité thermique inférieure à 0.3 W/m.K et notamment comprise entre 0.1 W/m.K et 0.3 W/m.K.

La couverture amovible (10) comprend une face externe et une face interne en regard de la conduite rigide (5). Au niveau de la face interne de la couverture amovible (10) est aménagé au moins un canal s'étendant sur au moins une partie de la longueur de la couverture amovible (10). Le canal s'étend parallèlement à l'axe de la couverture amovible (10) ou s'étend en zig-zag le long de la couverture amovible (10).

Lorsque la couverture amovible (10) est en vis-à-vis de la conduite rigide (5), le canal comprend de l'eau de l'étendue d'eau (3). Le canal est également soumis à la pression de fonctionnement comprise entre 100 bar et 500 bar.

Au sein du canal est agencé au moins un espace périphérique (7).

Par ailleurs, au moins un câble chauffant (8) selon l'invention est agencé au sein de l'espace périphérique (7) sur une partie ou sur l'ensemble de la longueur de la couverture (10). Le câble chauffant (8) est avantageusement solidaire de la couverture amovible (10). Le câble chauffant (8) est alors maintenu en position sur la couverture amovible (10) au moyen de bagues métalliques, plastiques ou tout autre moyen adapté. Le câble chauffant (8) peut alternativement être monté- serré dans le canal agencé sur la face interne de la couverture amovible (10). Le câble chauffant (8) est alors retenu dans le canal par friction avec ou sans moyens de fixation supplémentaire. Le contact par friction est notamment réalisé par contact entre la surface externe du câble chauffant (8) et les parois latérales du canal.

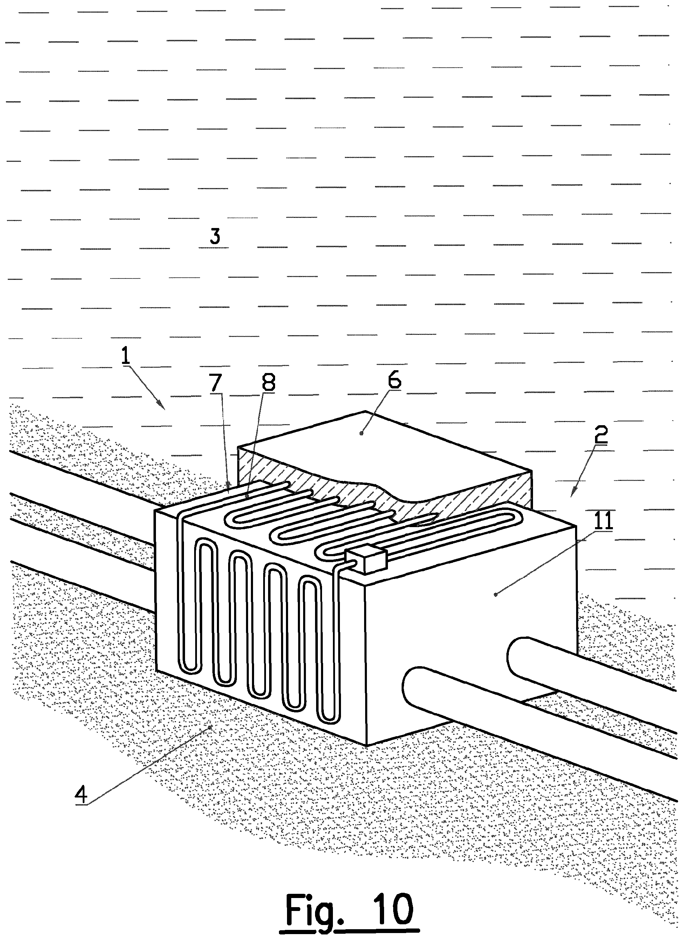

Dans un troisième mode particulier de réalisation de réalisation de l'invention représenté sur la figure 10, la structure (2) comprend un moyen de collecte et/ou de distribution (11) d'un mélange multiphasique d'hydrocarbures. Le moyen de collecte et/ou de distribution (11) peut par exemple être un collecteur (« manifold » en langue anglaise) disposé sur le fond marin (4).

Un collecteur est une structure composée d'un ensemble de conduites et de vannes qui permet de collecter et de distribuer un mélange multiphasique d'hydrocarbures en provenance de et/ou à destination d'une ou plusieurs conduites de types flexibles ou rigides.

Le dispositif chauffant (1) comprend un espace périphérique (7) agencé sur le pourtour de la structure (2). L'espace périphérique (7) est en l'espèce situé sur la face externe du moyen de collecte et/ou de distribution (11) et comprend ainsi de l'eau de l'étendue d'eau (3). La face externe peut être revêtue d'une enveloppe d'isolation thermique (6) de type fixe ou amovible. Sur la figure 10, l'enveloppe d'isolation thermique (6) est représentée partiellement pour simplifier et clarifier la figure. Avantageusement, l'enveloppe d'isolation thermique (6) recouvre en totalité la face externe du moyen de collecte et/ou de distribution (11) afin de limiter les échanges thermiques avec l'étendue d'eau (3). Dans le cas où l'invention est mise en oeuvre avec une enveloppe d'isolation thermique (6) de type amovible, on préfèrera notamment utiliser une couverture amovible (10) du type de celle précédemment décrite.

Le dispositif chauffant (1) comprend en outre au moins un câble chauffant (8) selon l'invention qui peut être enroulé autour du moyen de collecte et/ou de distribution (11) ou disposé sinusoïdalement sur la face externe du moyen de collecte et/ou de distribution (11) et maintenu par des bagues ou des colliers de fixation par exemple.

Dans le cas où l'invention est mise en oeuvre avec une enveloppe d'isolation thermique (6), celle-ci est avantageusement disposée entre l'étendue d'eau (3) et ledit au moins un câble chauffant (8), afin de réduire les pertes thermiques vers l'étendue d'eau (3) et ainsi d'augmenter le rendement du chauffage électrique du moyen de collecte et/ou de distribution (11). Lorsque l'invention est mise en oeuvre avec une couverture amovible (10), les câbles chauffants (8) sont avantageusement solidaires de la couverture amovible (10).

Un procédé de mise en oeuvre du dispositif chauffant (1) pour le transport d'un mélange multiphasique d'hydrocarbures va maintenant être décrit.

Le procédé comprend notamment les étapes suivantes :
- (a) fournir une structure (2) apte à acheminer un mélange multiphasique d' hydrocarbures comprenant au moins un espace périphérique (7) perméable à l'eau agencé sur le pourtour de ladite structure (2) ;
- (b) fournir au moins un câble chauffant (8) en :
- (b1) fournissant au moins un élément électrique interne (81) configuré pour générer une énergie thermique lorsqu'il est soumis à un courant électrique ;
- (b2) agençant au moins une couche principale d'isolation électrique (80) autour dudit au moins un élément électrique interne (81), ladite couche comprenant un polymère organique fluoré configuré pour former une enveloppe résistante à l'eau autour dudit au moins un élément électrique interne (81) ;
- (c) agencer ledit au moins un câble chauffant (8) au sein dudit au moins un espace périphérique (7) ;
- (d) immerger ladite structure (2) au sein d'une étendue d'eau (3).

En particulier, le procédé peut comprendre des sous étapes ou des étapes supplémentaires comme détaillées ci-dessous.

Lors de l'étape (a), lorsque la structure (2) comprend une conduite rigide (5) comme décrit précédemment, celle-ci est fournie en un seul tronçon ou en plusieurs tronçons.

De manière préférée, un revêtement interne est formé sur la surface interne de chaque tronçon. Pour cela, l'intérieur de la conduite rigide (5) est mis sous pression, par exemple à l'aide d'une pompe permettant d'injecter un fluide tel que de l'eau, de l'huile ou tout autre fluide adapté, afin de plaquer le revêtement interne contre la surface interne d'un tronçon.

Par ailleurs, dans le cas d'une pluralité de tronçons à assembler, une extrémité d'un deuxième tronçon est placée en regard d'une extrémité d'un premier tronçon. Puis, une jonction est réalisée entre ces deux tronçons par exemple par soudure. Ensuite, un revêtement externe et interne est réalisé au niveau de la jonction afin d'assurer une isolation thermique ainsi qu'une résistance à la corrosion au niveau de la zone de soudure.

Lorsque le dispositif chauffant (1) comprend une enveloppe isolante thermiquement (6), une sous étape peut consister à agencer une enveloppe isolante thermiquement (6) autour de la conduite rigide (5).

En particulier, lorsque l'enveloppe isolante thermiquement (6) est du type fixe, celle-ci est agencée autour de la conduite rigide (5) lors de l'étape (a).

Lorsque l'enveloppe isolante thermiquement (6) est du type mobile, plus particulièrement une couverture amovible (10) celle-ci est agencée autour de la conduite rigide (5) notamment après l'étape (f) d'immersion de la conduite rigide (5).

Lors d'une étape (b) on fournit au moins un câble chauffant (8). Plus particulièrement, le câble chauffant (8) est fourni en réalisant au moins les sous-étapes (b1) et (b2).

Lors de l'étape (b1) on fournit au moins un élément électrique interne (81) configuré pour générer une énergie thermique lorsqu'il est soumis à un courant électrique. Pour cela, un ensemble d'éléments conducteurs tels que 6 à 500 fils, voire de 600 fils, voire de 800 fils constitués d'alliage à base d'aluminium et/ou de cuivre sont assemblés par laminage et tréfilage. L'élément électrique interne (81) peut en outre être du type simple, segmenté, compact, creux ou tressé. De manière préférée, les fils sont compactés afin d'obtenir un taux de compacité d'au moins 60%, préférentiellement d'au moins 80% et encore plus avantageusement d'au moins 90%.

Un dépôt d'étain peut également être effectué sur la surface extérieure de l'élément électrique interne (81).

Ensuite, lors de l'étape (b2) on agence au moins une couche principale d'isolation électrique (80) autour dudit au moins un élément électrique interne (81) comprenant un polymère organique fluoré configuré pour former une enveloppe résistante à l'eau autour dudit au moins un élément électrique interne (81).

Dans une première variante, la couche principale d'isolation électrique (80) est extrudée en une ou plusieurs passes de manière à former un tube d'épaisseur d'au moins 1mm, d'au moins 10mm ou d'au moins 100mm autour de l'élément électrique interne (81).

Dans une deuxième variante, la couche principale d'isolation électrique (80) est coextrudée avec une couche supplémentaire (82) autour de l'élément électrique interne (81). La couche supplémentaire (82) pouvant être co-extrudée en position interne c'est-à-dire autour de l'élément électrique interne (81) ou en position externe c'est-à-dire que la couche principale d'isolation électrique (80) est co-extrudée autour de l'élément électrique interne (81).

Alternativement, chacune des couches peut être extrudée isolément. La couche d'isolation principale (80) peut être extrudée dans un premier temps autour de l'élément électrique interne (81). Puis, lors d'une seconde étape d'extrusion, la couche supplémentaire (82) peut-être extrudée autour de la couche d'isolation principale (80). Inversement, la couche supplémentaire (82) peut être extrudée dans un premier temps autour de l'élément électrique interne (81). Puis, lors d'une seconde étape d'extrusion, la couche d'isolation principale (80) peut-être extrudée autour de la couche supplémentaire (82).

Les vitesses d'extrusion et de refroidissement de la couche principale d'isolation électrique (80) sont suffisamment lentes pour optimiser la compacité du matériau et pour permettre la création de chaines fluorées longues tout en minimisant le risque de formation de bulles d'air dans le polymère organique fluoré. La vitesse d'extrusion (dites « Melt Flow Rate » en langue anglaise) est par exemple comprise entre 0.5 g/10min et 8 g/10min.

La température d'extrusion est supérieure au point de fusion du polymère organique fluoré. Généralement, la température d'extrusion est comprise entre 260°C et 330°C.

Le taux de cristallinité du polymère organique fluoré est avantageusement supérieur à 40%.

Puis lors de l'étape (c) on agence le câble chauffant (8) au sein dudit au moins un espace périphérique (7). Le câble chauffant (8) est agencé en hélice ou parallèlement à l'axe de la conduite rigide (5) à l'aide d'une rubanneuse par exemple. Alternativement, le câble chauffant (8) peut être agencé au sein de l'espace périphérique (7) en S-Z en réalisation les étapes suivantes :
- déposant ledit câble selon une première portion d'hélice dans un sens de rotation d'un angle prédéterminé, puis
- déposant ledit câble selon une deuxième portion d'hélice dans un sens de rotation contraire au sens précédent d'un angle de rotation égale à l'angle précédent,
- répétant autant de fois que nécessaire les deux étapes précédentes.

Lorsque plusieurs câbles chauffants (8',8",8'") sont regroupés selon un faisceau (888) l'étape (b) comprend une sous-étape supplémentaire (b2') réalisée après l'étape (b2) consistant à agencer une gaine externe (83) autour d'au moins deux câbles chauffants (8',8") et avantageusement d'au moins trois câbles chauffants (8',8",8'").

Lors de l'étape (b2'), la gaine externe (83) est extrudée autour d'au moins deux câbles chauffants (8',8") et avantageusement d'au moins trois câbles chauffants (8',8",8‴). Puis des moyens d'infiltrations (86) sont formés par perforation de la gaine externe (83) tous les 1 m, voire tous les 100 m ou tous les 500 m.

Lorsque le procédé comprend la sous-étape (b2') l'étape (c) peut être réalisée à l'aide de moyens conventionnels de pose tel qu'une spiraleuse simplifiant ainsi l'installation des câbles chauffants (8).

Lors d'une étape (d), la structure (2) est immergée au sein d'une étendue d'eau (3) à partir d'un bateau de pose par exemple. Lors de cette étape, la structure (2) et notamment la conduite rigide (5) est passée à travers des moyens de retenue conventionnels comme des tensioneurs. Les tensioneurs supportent désormais une conduite (5) allégée et la pression de serrage devant être exercée sur la conduite (5) est amoindrit en comparaison à celle nécessaire pour un PiP. En outre, l'espace périphérique étant volontairement inondé, l'absence de détérioration à la surface de la conduite (5) lors de sa manipulation n'est plus un facteur prépondérant. En effet, pour de telles conduites (5), une détérioration à la surface peut être tolérée. La conduite (5) peut donc être plus facilement manipulée et être posée au sein d'étendues d'eau (3) plus profondes par rapport aux structures de l'art antérieur.

## Revendications

1. Ensemble comprenant une étendue d'eau et un dispositif chauffant pour le transport d'un mélange multiphasique d'hydrocarbures, le dispositif chauffant comprenant :
- une structure (2) immergée dans l'étendue d'eau (3) apte à acheminer un mélange multiphasique d'hydrocarbures ;
- au moins un espace périphérique (7) agencé sur le pourtour de ladite structure (2) ;
- au moins un câble chauffant (8) agencé au sein dudit au moins un espace périphérique (7), le câble chauffant (8) étant en contact avec l'eau de l'étendu d'eau, le câble chauffant (8) comprenant :
- au moins un élément électrique interne (81) configuré pour générer une énergie thermique lorsqu'il est soumis à un courant électrique et
- au moins une couche principale d'isolation électrique (80),
**caractérisé en ce que** ledit au moins un espace périphérique (7) est perméable à l'eau de ladite étendue d'eau (3) et comprend ainsi de l'eau de l'étendue d'eau (3)
**et en ce que** ladite couche principale d'isolation électrique (80) est configurée pour former une enveloppe résistante à ladite eau autour dudit au moins un élément électrique interne (81), ladite couche principale d'isolation électrique (80) comprenant un polymère organique fluoré.

2. Ensemble selon la revendication 1 **caractérisé en ce que** ladite couche principale d'isolation électrique (80) possède une épaisseur d'au moins 1 mm, avantageusement d'au moins 10 mm, encore plus avantageusement d'au moins 100 mm.

3. Ensemble selon l'une quelconque des revendications précédentes **caractérisé en ce que** ledit au moins un câble chauffant (8) comprend au moins une couche supplémentaire (82).

4. Ensemble selon la revendication 3 **caractérisé en ce que** ladite au moins une couche supplémentaire (82) comprend un polymère organique fluoré.

5. Ensemble selon l'une des revendications 3 ou 4 **caractérisé en ce que** ladite au moins une couche supplémentaire (82) comprend des particules conductrices.

6. Ensemble selon l'une des revendications 3, 4 ou 5 **caractérisé en ce que** ladite au moins une couche supplémentaire (82) est disposée entre ledit au moins un élément électrique interne (81) et ladite couche principale d'isolation électrique (80) ou autour de ladite couche principale d'isolation électrique (80).

7. Ensemble selon l'une quelconque des revendications précédentes **caractérisé en ce que** ledit polymère organique fluoré est choisi parmi l'éthylène tétrafluoroethylène (ETFE), le perfluoroalkoxy (PFA), l'ethylène propylène fluoré (FEP), le polytetrafluoroethylène (PTFE) ou leurs mélanges.

8. Ensemble selon l'une quelconque des revendications précédentes **caractérisé en ce que** ledit polymère organique fluoré comprend une reprise volumique d'eau inférieure à 1%, inférieure à 0.5% et de manière préférée inférieure à 0.1% selon la norme ASTM D570.

9. Ensemble selon l'une quelconque des revendications précédentes **caractérisé en ce que** ladite couche principale d'isolation électrique (80) comprend au moins 50% en masse de polymère organique fluoré, préférentiellement au moins 70% en masse de polymère organique fluoré, avantageusement exclusivement un polymère organique fluoré.

10. Ensemble selon l'une quelconque des revendications précédentes **caractérisé en ce qu**'il comprend :
- au moins une conduite (5) immergée dans une étendue d'eau (3) apte à acheminer un mélange multiphasique d'hydrocarbures ;
- une enveloppe isolante thermiquement (6) comprenant
- au moins un canal s'étendant sur au moins une partie de la conduite (5);
- ledit au moins un espace périphérique (7) étant agencé au sein dudit au moins un canal.

11. Ensemble selon la revendication 10 **caractérisé en ce que** ladite enveloppe isolante thermiquement (6) comprend au moins deux parties adjacentes (60) formant au moins un canal longitudinal.

12. Ensemble selon l'une quelconque des revendications 1 à 9 **caractérisé en ce qu'**il comprend :
- au moins une conduite (5) immergée dans une étendue d'eau (3) apte à acheminer un mélange multiphasique d'hydrocarbures ;
- au moins une couverture amovible (10) disposée en regard de la conduite (5) comprenant une face interne en regard de ladite conduite (5) ;
- ladite face interne comprend au moins un canal s'étendant sur au moins une partie de la longueur de ladite au moins couverture amovible (10) ;
- ledit au moins un espace périphérique (7) est agencé au sein dudit au moins un canal.

13. Ensemble selon l'une quelconque des revendications précédentes **caractérisé en ce que** ladite structure (2) comprend au moins un moyen (11) de collecte et/ou de distribution d'un mélange multiphasique d'hydrocarbures.

14. Procédé de mise en oeuvre d'un ensemble selon l'une quelconque des revendications 1 à 13, le procédé comprenant les étapes suivantes :
- (a) fournir une structure (2) apte à acheminer un mélange multiphasique d'hydrocarbures comprenant au moins un espace périphérique (7) perméable à l'eau agencé sur le pourtour de ladite structure (2) ;
- (b) fournir au moins un câble chauffant (8) en :
- (b1) fournissant au moins un élément électrique interne (81) configuré pour générer une énergie thermique lorsqu'il est soumis à un courant électrique ;
- (b2) agençant au moins une couche principale d'isolation électrique (80) autour dudit au moins un élément électrique interne (81), ladite couche comprenant un polymère organique fluoré configuré pour former une enveloppe résistante à l'eau autour dudit au moins un élément électrique interne (81) ;
- (c) agencer ledit au moins câble chauffant (8) au sein dudit au moins un espace périphérique (7) ;
- (d) immerger ladite structure (2) au sein d'une étendue d'eau (3) ledit au moins un espace périphérique (7) comprenant de l'eau de l'étendue d'eau (3), le câble chauffant (8) étant en contact avec l'eau de l'étendu d'eau.

## Patentansprüche

1. Anordnung, umfassend eine Wasserstrecke und eine Heizvorrichtung für den Transport eines mehrphasigen Kohlenwasserstoffgemischs, die Heizvorrichtung umfassend:
- eine Struktur (2), die in das Gewässer (3) eingetaucht ist, die geeignet ist, um ein mehrphasiges Kohlenwasserstoffgemisch zu leiten;
- mindestens einen peripheren Raum (7), der an dem Umfang der Struktur (2) angeordnet ist;
- mindestens ein Heizkabel (8), das innerhalb des mindestens einen Umfangsraums (7) angeordnet ist, wobei das Heizkabel (8) in Kontakt mit dem Wasser in dem Gewässer ist, das Heizkabel (8) umfassend:
- mindestens ein internes elektrisches Element (81), das konfiguriert ist, um Wärmeenergie zu erzeugen, wenn es einem elektrischen Strom unterzogen wird, und
- mindestens eine elektrisch isolierende Hauptschicht (80),
**dadurch gekennzeichnet , dass** der mindestens eine Umfangsraum (7) für Wasser aus dem Gewässer (3) durchlässig ist und somit Wasser aus dem Gewässer (3) umfasst,
**und dass** die elektrisch isolierende Hauptschicht (80) konfiguriert ist, um eine wasserbeständige Hülle um das mindestens eine innere elektrische Element (81) zu bilden, die elektrisch isolierende Hauptschicht (80) umfassend ein fluoriertes organisches Polymer.

2. Anordnung nach Anspruch 1, **dadurch gekennzeichnet, dass** die elektrisch isolierende Hauptschicht (80) eine Stärke von mindestens 1 mm, vorteilhafterweise von mindestens 10 mm, noch vorteilhafter von mindestens 100 mm besitzt.

3. Anordnung nach einem der vorherigen Ansprüche, **dadurch gekennzeichnet, dass** das mindestens eine Heizkabel (8) mindestens eine zusätzliche Schicht (82) umfasst.

4. Anordnung nach Anspruch 3, **dadurch gekennzeichnet, dass** die mindestens eine zusätzliche Schicht (82) ein fluoriertes organisches Polymer umfasst.

5. Anordnung nach einem der Ansprüche 3 oder 4, **dadurch gekennzeichnet , dass** die mindestens eine zusätzliche Schicht (82) leitende Partikel umfasst.

6. Anordnung nach einem der Ansprüche 3, 4 oder 5, **dadurch gekennzeichnet, dass** die mindestens eine zusätzliche Schicht (82) zwischen dem mindestens einen inneren elektrischen Element (81) und der Hauptschicht (80) der elektrischen Isolierung oder um die Hauptschicht (80) der elektrischen Isolierung angeordnet ist.

7. Anordnung nach einem der vorherigen Ansprüche, **dadurch gekennzeichnet, dass** das fluorierte organische Polymer ausgewählt ist aus Ethylentetrafluorethylen (ETFE), Perfluoralkoxy (PFA), fluoriertem Ethylenpropylen (FEP), Polytetrafluorethylen (PTFE) oder deren Gemischen.

8. Satz nach einem der vorherigen Ansprüche, **dadurch gekennzeichnet, dass** das fluorierte organische Polymer eine volumetrische Wasseraufnahme von weniger als 1 %, weniger als 0,5 % und bevorzugt weniger als 0,1 % gemäß ASTM D570 aufweist.

9. Anordnung nach einem der vorherigen Ansprüche, **dadurch gekennzeichnet, dass** die elektrisch isolierende Hauptschicht (80) mindestens 50 Masse-% fluoriertes organisches Polymer, vorzugsweise mindestens 70 Masse-% fluoriertes organisches Polymer, vorteilhafterweise ausschließlich ein fluoriertes organisches Polymer, umfasst.

10. Anordnung nach einem der vorherigen Ansprüche, **dadurch gekennzeichnet, dass** sie ferner Folgendes umfasst:
- mindestens eine Leitung (5), die in ein Gewässer (3) eingetaucht ist, die geeignet ist, ein mehrphasiges Kohlenwasserstoffgemisch zu leiten;
- eine thermisch isolierende Hülle (6), umfassend
- mindestens einen Kanal, der sich über mindestens einen Teil der Leitung (5) erstreckt;
- wobei der mindestens eine Umfangsraum (7) innerhalb des mindestens einen Kanals angeordnet ist.

11. Anordnung nach Anspruch 10, **dadurch gekennzeichnet , dass** die wärmeisolierende Hülle (6) mindestens zwei benachbarte Abschnitte (60) umfasst, die mindestens einen Längskanal bilden.

12. Anordnung nach einem der Ansprüche 1 bis 9, **dadurch gekennzeichnet, dass** sie Folgendes umfasst:
- mindestens eine Leitung (5), die in ein Gewässer (3) eingetaucht ist, die geeignet ist, ein mehrphasiges Kohlenwasserstoffgemisch zu leiten;
- mindestens eine abnehmbare Abdeckung (10), die gegenüber der Leitung (5) angeordnet ist und eine Innenseite umfasst, die der Leitung (5) zugewandt ist;
- wobei die Innenseite mindestens einen Kanal umfasst, der sich über mindestens einen Teil der Länge der mindestens einen abnehmbaren Abdeckung (10) erstreckt;
- wobei der mindestens eine Umfangsraum (7) innerhalb des mindestens einen Kanals angeordnet ist.

13. Anordnung nach einem der vorherigen Ansprüche, **dadurch gekennzeichnet, dass** die Struktur (2) mindestens eine Einrichtung (11) zum Sammeln und/oder Verteilen eines mehrphasigen Kohlenwasserstoffgemischs umfasst.

14. Verfahren zum Implementieren einer Anordnung nach einem der Ansprüche 1 bis 13, das Verfahren umfassend die folgenden Schritte:
- (a) Bereitstellen einer Struktur (2), die geeignet ist, ein mehrphasiges Kohlenwasserstoffgemisch zu leiten, das mindestens einen wasserdurchlässigen peripheren Raum (7) umfasst, der an dem Umfang der Struktur (2) angeordnet ist;
- (b) Bereitstellen mindestens eines Heizkabels (8) durch:
- (b1) Bereitstellen mindestens eines internen elektrischen Elements (81), das konfiguriert ist, um Wärmeenergie zu erzeugen, wenn es einem elektrischen Strom unterzogen wird;
- (b2) Anordnen mindestens einer elektrischen isolierenden Hauptschicht (80) um das mindestens eine innere elektrische Element (81), wobei die Schicht ein fluoriertes organisches Polymer umfasst, das konfiguriert ist, um eine wasserbeständige Hülle um das mindestens eine innere elektrische Element (81) zu bilden;
- (c) Anordnen des mindestens einen Heizkabels (8) innerhalb des mindestens einen Umfangsraums (7);
- (d) Eintauchen der Struktur (2) innerhalb eines Gewässers (3), wobei mindestens ein Umfangsraum (7) Wasser des Gewässers (3) umfasst, wobei das Heizkabel (8) in Kontakt mit dem Wasser des Gewässers ist.

## Claims

1. An assembly comprising a body of water and a heating device for transporting a multiphase mixture of hydrocarbons, the heating device comprising:
- a structure (2) submerged in the body of water (3) capable of conveying a multiphase mixture of hydrocarbons;
- at least one peripheral space (7) arranged on the perimeter of said structure (2);
- at least one heating cable (8) arranged within said at least one peripheral space (7), the heating cable (8) being in contact with water from the body of water, the heating cable (8)comprising:
- at least one inner electrical element (81) configured to generate thermal energy when it is subjected to an electric current; and
- at least one primary electrically insulating layer (80);
**characterized in that said** at least one peripheral space (7) is permeable to water from said body of water (3) and thus comprises water from the body of water (3)
**and in that** said primary electrically insulating layer (80) is configured to form a jacket resisting to said water around said at least one inner electrical element (81), said primary electrically insulating layer (80) comprising a fluorinated organic polymer.

2. The assembly according to claim 1, **characterized in that** primary electrically insulating layer (80) has a thickness of at least 1 mm, advantageously at least 10 mm, still more advantageously at least 100 mm.

3. The assembly according to any one of the preceding claims, **characterized in that** said at least one heating cable (8) comprises at least one additional layer (82).

4. The assembly according to claim 3, **characterized in that** said additional layer (82) comprises a fluorinated organic polymer.

5. The assembly according to claim 3 or 4, **characterized in that** said additional layer (82) comprises conductive particles.

6. The assembly according to one of claims 3, 4 or 5, **characterized in that** said at least one additional layer (82) is arranged between said at least one inner electrical element (81) and said primary electrically insulating layer (80) or around said primary electrically insulating layer (80).

7. The assembly according to any one of the preceding claims, **characterized in that** said fluorinated organic polymer is chosen from among ethylene tetrafluoroethylene (ETFE), perfluoroalkoxy (PFA), fluorinated ethylene propylene (FEP), polytetrafluoroethylene (PTFE) or mixtures thereof.

8. The assembly according to any one of the preceding claims, **characterized in that** said fluorinated organic polymer comprises a volumetric uptake of water of less than 1%, less than 0.5% and preferably less than 0.1% according to standard ASTM D570.

9. The assembly according to any one of the preceding claims, **characterized in that** said primary electrically insulating layer (80) comprises at least 50 wt% of the fluorinated organic polymer, preferably at least 70 wt% of the fluorinated organic polymer, advantageously exclusively a fluorinated organic polymer.

10. The assembly according to any one of the preceding claims, **characterized in that** it comprises:
- at least one pipe (5) submerged in a body of water (3) capable of conveying a multiphase mixture of hydrocarbons;
- a thermally insulating jacket (6) comprising:
- at least one channel extending over at least part of the pipe (5);
- said at least one peripheral space (7) being arranged within said at least one channel.

11. The assembly according to claim 10, **characterized in that** said thermally insulating jacket (6) comprises at least two adjacent parts (60) forming at least one longitudinal channel.

12. The assembly according to any one of claims 1 to 9, **characterized in that** it comprises:
- at least one pipe (5) submerged in a body of water (3) capable of conveying a multiphase mixture of hydrocarbons;
- at least one removable lid (10) arranged facing the pipe (5) comprising an inner face facing said pipe (5);
- said inner face comprises at least one channel extending over at least one part of the length of said at least one removable lid (10);
- said at least one peripheral space (7) being arranged within said at least one channel.

13. The assembly according to any one of the preceding claims, **characterized in that** said heating structure (2) comprises at least one means (11) for collecting and/or distributing a multiphase mixture of hydrocarbons.

14. A method for implementing an assembly according to any one of claims 1 to 13, the method comprising the following steps:
- (a) providing a structure (2) capable of conveying a multiphase mixture of hydrocarbons comprising at least one water-permeable peripheral space (7) arranged on the perimeter of said structure (2);
- (b) providing at least one heating cable (8) by:
- (b1) providing at least one inner electrical element (81) configured to generate thermal energy when it is subjected to an electric current;
- (b2) arranging at least one primary electrically insulating layer (80) around said at least one inner electrical element (81), said layer comprising a fluorinated organic polymer configured to form a water-resistant jacket around said at least one inner electrical element (81);
- (c) arranging said at least one heating cable (8) within said at least one peripheral space (7);
- (d) submerging said structure (2) within a body of water (3), said at least one peripheral space (7) comprising water from the body of water (3), the heating cable (8) being in contact with water from the body of water.
